# EUROPÄISCHE PATENTSCHRIFT

(11) **EP 1 212 739 B1**
(45) Veröffentlichungstag und Bekanntmachung des Hinweises auf die Patenterteilung: **19.11.2003**
(21) Anmeldenummer: 00962451.1
(22) Anmeldetag: 07.09.2000
(51) Int. Cl.: G08G 1/09

(54) **FAHRZEUGDATENBUSSYSTEM MIT ORTUNGSMITTELN**
VEHICLE DATA BUS SYSTEM WITH POSITIONING MEANS
SYSTEME BUS DE DONNEES DOTE DE MOYENS DE LOCALISATION ET DESTINE A UN VEHICULE AUTOMOBILE

(30) Priorität: 15.09.1999 DE 19944177
(43) Veröffentlichungstag der Anmeldung: 12.06.2002
(73) Patentinhaber: DaimlerChrysler AG, 70567 Stuttgart (DE)
(72) Erfinder: HOFFMANN, Stefan, 72555 Metzingen (DE); HOYLAND, Peter, 71069 Darmsheim (DE); KNAPP, Reiner, 71088 Holzgerlingen (DE); MÄHNER, Michael, 71032 Böblingen (DE); SCHLUTTER, Matthias, 71063 Sindelfingen (DE)
(86) Internationale Anmeldenummer: EP0008735
(87) Internationale Veröffentlichungsnummer: WO01020575

(56) Entgegenhaltungen:
- EP-A- 0 789 343
- DE-A- 19 640 735
- GB-A- 2 305 262
- US-A- 4 942 571

## Beschreibung

Die Erfindung bezieht sich auf ein Fahrzeugdatenbussystem mit Ortungsmitteln, die eine Ortungsrecheneinheit und eine Ortungssensorik aufweisen, die wenigstens einen GPS(Global Positioning System)-Empfänger mit zugehöriger GPS-Antenne sowie Gyrodatenerfassungsmittel beinhaltet, sowie mit einem Datenbus, über den mehrere angeschlossene Busteilnehmer miteinander in Datenübertragungsverbindung stehen.

In der EP 789 343 A1 wird ein gattungsgemäßes Fahrzeugdatenbussystem mit Ortungsmitteln und mehreren angeschlossenen Busteilnehmern beschrieben. Als Ortungssensorik können GPS-Empfänger, Gyrodatenbestimmungsmittel, Raddrehzahlbestimmungsmittel, Tachometer, Odometer und Beschleunigungssensoren eingesetzt werden. Ein Ortungsrecheneinheit ermittelt mit Hilfe der Daten der Ortungssensorik Positionsdaten, die auf den Datenbus ausgegeben werden können.

In Automobilen der Anmelderin, z. B. der S-Klasse, finden häufig Ortungsmittel Verwendung, die auf GPS-Basis arbeiten, bei Bedarf unterstützt von weiteren Positions-/Lagebestimmungsmitteln zur Koppelnavigation, die insbesondere ein Gyroskop und ein Odometer umfassen können. Außerdem sind häufig über einen Datenbus, der Teil eines ganzen Datenbusnetzwerks sein kann, mehrere fahrzeugseitige Komponenten, nachfolgend Busteilnehmer genannt, miteinander verbunden, bei denen es sich herkömmlicherweise primär um Steuergeräte zur Erfüllung lokaler fahrzeugseitiger Steuerungsfunktionen handelt. In jüngerer Zeit gewinnen als derartige Fahrzeugdatenbusteilnehmer auch Telematikdiensteinheiten an Bedeutung, die einerseits über den Fahrzeugdatenbus mit der "Fahrzeugwelt" und andererseits über einen oder mehrere drahtlose Übertragungskanäle mit fahrzeugexternen, entfernten Stationen in Kommunikationsverbindung stehen, z.B. zur Erfüllung von Funktionen wie Notruf, Diebstahlverfolgung, Verkehrslagedatengewinnung durch Stichprobenfahrzeuge etc.

In früheren Automobilen dieser Art bildeten die Ortungsmittel einerseits und der Datenbus mit angeschlossenen Fahrzeugsteuergeräten andererseits voneinander getrennte Fahrzeugteilsysteme, von denen häufig auch nur eines von beiden realisiert war. Die Ortungsmittel ihrerseits bestanden häufig aus relativ vielen Einzelkomponenten. So offenbart die Patentschrift US 5.644.317 ein automatisches Fahrzeuglokalisierungssystem, bei dem im Fahrzeug eine Ortungssensorik aus mehreren einzelnen Sensoreinheiten und eine Ortungsrecheneinheit vorgesehen sind, der die Ausgangssignale der verschiedenen Ortungssensoreinheiten zugeführt sind. Die Ortungsrecheneinheit gibt die von ihr gewonnenen Daten über die Fahrzeugposition und Fahrzeuglage über einen drahtlosen Kommunikationskanal an eine externe Einheit zur Präsentation der übertragenen Positions-/Lagedaten ab.

Ein in der Patentschrift US 5.740.049 offenbartes Fahrzeugpositionsbestimmungssystem ermittelt anhand der Ausgangssignale eines Fahrzeuggeschwindigkeitssensors und eines Gyroskops eine erste vorläufige Positionsinformation, korrigiert diese durch Ableiten einer zweiten vorläufigen Positionsinformation durch Abgleich mit abgespeicherten Wegstreckendaten und gewinnt eine dritte vorläufige Positionsinformation aus dem Ausgangssignal eines GPS-Empfängers. Durch Auswerten bzw. Abgleich der verschiedenen vorläufigen Positionsinformationen wird eine endgültige Fahrzeugposition bestimmt und in einer Straßenkartenansicht auf einem Bildschirm angezeigt.

Oftmals sind die Ortungsmittel integrierter Bestandteil einer Fahrzeugnavigationseinheit oder dieser mit dem alleinigen Zweck vorgeschaltet, die für die Navigation notwendigen Daten über die Position und Lage, d.h. Orientierung, des Fahrzeugs im Raum zu liefern und/oder die ermittelte Position bzw. Lage des Fahrzeugs optisch anzuzeigen, siehe z.B. die Offenlegungsschriften EP 0 675 341 A1 und WO 98/36288 A1.

In der Offenlegungsschrift WO 98/10246 A1 ist ein Gerät zur Aufnahme geographischer Daten offenbart, das je nach Auslegung als portables Gerät oder zum Einbau z.B. in ein Fahrzeug bestimmt sein kann und neben Positionsbestimmungsmitteln zusätzlich Kameras zur Aufnahme von Bildern aufweist. Eine Rechnereinheit empfängt die von den Positionsbestimmungsmitteln und den Kameras abgegebenen Daten und wertet diese dahingehend aus, daß die Richtung des Bildes relativ zum Gerät oder die geographischen Daten für ein mit den Kameras erfaßtes Objekt ermittelt werden. Das Gerät kann über einen drahtlosen Kommunikationskanal mit einer entfernten Station, z.B. einem dortigen Zentralrechner, in Kommunikationsverbindung stehen.

In der Offenlegungsschrift DE 196 40 735 A1 ist ein Telematikgerät für ein Kraftfahrzeug beschrieben, das ein Autoradio mit einem RDS-Modul und einem eingebauten Ortungssystem mit GPS-Modul, ein Funktelefon mit GSM-Modul, einen Speicher und eine Anzeige umfasst. Das RDS-Modul, das GPS-Modul und das GSM-Modul sind zusammen mit einer Spracheinheit und dem Autoradio in einem Gehäuse des Telematikgerätes eingebaut, wobei das Gehäuse wenigstens Antennenanschlüsse für das Autoradio, das GSM-Modul und das GPS-Modul sowie Schnittstellen für wenigstens einen CAN-Bus und/oder einen weiteren Datenbus sowie für wenigstens einen Lautsprecher und/oder ein Mikrofon aufweist. Mittels Wegsensoren, z.B. Radsensoren, einem Richtungssensor und/oder dem GPS-Modul kann die Fahrzeugposition mitgekoppelt und auf einer digitalen Karte der optischen Anzeige ausgegeben werden. Durch Kommunikation mit einer Zentrale oder ein in das Telematikgerät eingebautes Navigationssystem oder ein daran über den CAN-Bus oder den weiteren Datenbus anschließbares Navigationsmodul kann eine gewünschte Fahrtroute berechnet werden, die dann auf der optischen Anzeige angezeigt wird. Über den CAN-Bus und/oder den weiteren Datenbus kann das Telematikgerät Einfluss auf ein Motorsteuergerät nehmen, das einen weiteren Busteilnehmer bildet.

Der Erfindung liegt als technisches Problem die Bereitstellung eines Fahrzeugdatenbussystems der eingangs genannten Art zugrunde, das eine komfortable und vergleichsweise flexibel einsetzbare und gut standardisierbare Ortungsfunktionalität aufweist.

Die Erfindung löst dieses Problem durch die Bereitstellung eines Fahrzeugdatenbussystems mit den Merkmalen des Anspruchs 1. Bei diesem beinhalten die Ortungsmittel charakteristischerweise ein in spezieller Weise als einer der an den Datenbus angekoppelten Busteilnehmer ausgebildetes Ortungsmodul, in welchem die zur Fahrzeugortung verwendeten Komponenten weitestgehend in einer Baueinheit integriert enthalten sind, wobei die zugehörige Ortungssensorik mindestens teilweise in das Ortungsmodul integriert und im übrigen an den Datenbus angekoppelt ist, so daß das Ortungsmodul die benötigten Ortungssensordaten wenigstens teilweise intern gewinnt und im übrigen über den Datenbus empfängt. Speziell sind im Ortungsmodul eine Ortungsrecheneinheit, welche die rechnerische Positionsbestimmung vornimmt, und ein GPS-Empfänger enthalten. Des weiteren weist es ein Gyroskop oder Mittel zum Empfangen entsprechender Gyrodaten über den Datenbus von einem Fahrdynamik-/Radschlupfregelsystem auf, wenn letzteres eine entsprechende Gyrodatengewinnungssensorik umfaßt, wie dies z.B. bei einigen herkömmlichen Fahrdynamikregelsystemen der Fall ist.

Durch die modulartige Zusammenfassung und die Datenbusanbindung der Ortungsmittel sind diese in einer standardisierten Form für unterschiedliche Fahrzeuge und in unterschiedlichen Ländern ohne größere Anpassungsmaßnahmen einsetzbar und stellen in flexibler Weise bedarfsgerecht entsprechende Ortungsinformationen auf dem Datenbus zur Verfügung, von wo sie von anderen fahrzeugseitigen Busteilnehmern abgerufen werden können. Die zur Verfügung gestellten Ortungsinformationen umfassen dabei insbesondere Fahrzeugpositionsdaten, Fahrtrichtungswinkeldaten, Fahrgeschwindigkeitsdaten und Höhenlagedaten, d.h. Daten über die momentane Höhenlage des Fahrzeugs über dem Meeresspiegel (NN). Vorzugsweise wird zu den Positionsdaten eine Ortungsgenauigkeitsklassifikation (Ortungsgüte) in Form einer Kennzahl angegeben, die die Unsicherheit der berechneten Positionsdaten angibt. Zur Ermittlung dieser Ortungsinformationen verwendet das Ortungsmodul neben den Gyrodaten und den GPS-Daten zusätzlich Raddrehzahldaten und Daten darüber, ob das Fahrzeug momentan vorwärts oder rückwärts fährt, d.h. Vorwärts/Rückwärts-Fahrtrichtungsdaten, die es aus dem Datenbus entnimmt. Die Ortungsinformationen können insbesondere für von solchen Informationen Gebrauch machenden Fahrzeugsteuergeräten verschiedener fahrzeugbezogener Funktionalitäten, wie Fahrdynamikregelung, Antiblockierregelung, Ahtriebsschlupfregelung, Motorsteuerung und Getriebesteuerung, von Anzeigeinstrumenten, wie einem Kombiinstrument oder einer speziellen Komfortinformationsanzeige, aber auch von Kommunikationseinheiten verwendet werden, die über den Datenbus mit fahrzeugseitigen Komponenten und über einen drahtlosen Kommunikationskanal mit entfernten, fahrzeugexternen Komponenten kommunizieren.

Bei einem nach Anspruch 4 weitergebildeten Fahrzeugdatenbussystem ist in der das Ortungsmodul darstellenden Baueinheit zusätzlich eine integrierte GPS-Antenne enthalten, so daß das,Anbringen einer separaten GPS-Antenne am Fahrzeug und das Anschließen derselben an das Ortungsmodul entfällt.

Bei einem nach Anspruch 5 weitergebildeten Fahrzeugdatenbussystem ist eine Navigationseinheit als ein weiterer Busteilnehmer vorgesehen, welche die Positionsdaten vom Ortungsmodul empfängt. Durch einen herkömmlichen Map-Matching-Prozess, in welchem diese Positionsdaten mit abgespeicherten Wegenetzdaten verglichen werden, gewinnt sie eine verbesserte Positionsinformation mit einer neuen Ortungsgenauigkeitklassifikation (Ortungsgüte). Charakteristischerweise koppelt die Navigationseinheit die entsprechenden Positionskorrekturdaten über den Datenbus zum Ortungsmodul zurück, das selbige für einen genauigkeitsverbessernden Korrekturabgleich verwenden kann.

Bei einem nach Anspruch 8 weitergebildeten Fahrzeugdatenbussystem sind eine oder mehrere Telematikdiensteinheiten als weitere Busteilnehmer vorgesehen, welche die vom Ortungsmodul gewonnenen Ortungsdaten nutzen, beispielsweise für eine Notruffunktion, zur Diebstahlverfolgung und/oder zur Verkehrslagebstimmung mit Stichprobenfahrzeugen (sogenannte Floating-Car-Data-Methode).

Bei einem nach Anspruch 9 weitergebildeten Fahrzeugdatenbussystem ist eine Motor- und/oder eine Getriebesteuerungseinheit als jeweiliger weiterer Busteilnehmer vorgesehen. Die Motor- bzw. die Getriebesteuerungseinheit nutzt die Datenbusanbindung unter anderem dazu, die vom Ortungsmodul bereitgestellten Höhenlagedaten einzulesen. Dadurch kann auf einen herkömmlicherweise in modernen derartigen Einheiten vorhandenen Höhensensor verzichtet werden.

Bei einem nach Anspruch 10 weitergebildeten Fahrzeugdatenbussystem ist das Ortungsmodul Teil eines weiteren Busteilnehmers, wobei die Ortungsrecheneinheit von diesem Busteilnehmer für zusätzliche Aufgaben verwendet wird.

Vorteilhafte Ausführungsformen der Erfindung sind in den Zeichnungen dargestellt und werden nachfolgend beschrieben. Hierbei zeigen:
- Fig. 1: eine schematische, teilweise Darstellung eines Fahrzeugdatenbussystems mit Ortungsmodul mit integriertem Gyroskop und externer GPS-Antenne,
- Fig. 2: eine Ansicht entspechend Fig. 1, jedoch für ein modifiziertes Datenbussystem mit zusätzlicher Navigationseinheit,
- Fig. 3: eine Ansicht entspechend Fig. 2, jedoch für ein modifiziertes Datenbussystem mit gyroskopfreiem, busseitige Gyrodaten empfangendem Ortungsmodul und
- Fig. 4: eine Ansicht entsprechend Fig. 2, jedoch für ein modifiziertes Datenbussystem mit in das Ortungsmodul integrierter GPS-Antenne.

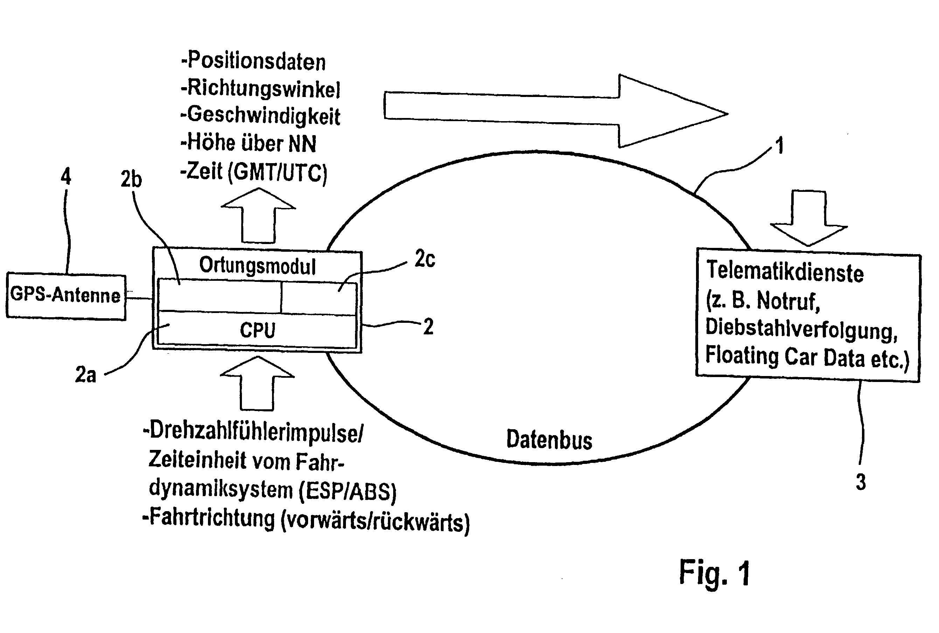

Das in Fig. 1 nur mit seinen hier speziell interessierenden Komponenten dargestellte Fahrzeugdatenbussystem beinhaltet einen Datenbus 1, an den mehrere Busteilnehmer angeschlossen sind, von denen ein Ortungsmodul 2 und ein Telematikdiensteblock 3 explizit gezeigt sind, in welchem vereinfachend eine oder mehrere Telematikdiensteinheiten für entsprechende Funktionalitäten zusammengefaßt sind, wie z.B. für Notruf, Diebstahlverfolgung und Stichprobenfahrzeug-Verkehrslageerfassung. Das als ein einheitlich einbaubares Bauteil realisierte Ortungsmodul 2 enthält in diesem Beispiel eine Ortungsrecheneinheit 2a, einen GPS-Empfänger 2b und ein Gyroskop 2c in integrierter Form.

An den GPS-Empfänger 2b ist eine externe, an geeigneter Stelle am Fahrzeug angebrachte GPS-Antenne 4 angeschlossen. Das Ortungsmodul 2 ist über eine entsprechende Busschnittstelle in den Datenbus 1 eingekoppelt und liest von diesem Raddrehzahldaten sowie Vorwärts/Rückwärts-Fahrtrichtungsdaten ein. Die Raddrehzahldaten können beispielsweise in Form von Drehzahlfühlerimpulsen pro Zeiteinheit durch ein Fahrdynamik-/Radschlupfregelsystem geliefert werden, das diese Daten auch zur eigenen Nutzung gewinnt, wie an sich bekannt. Dabei kann es sich bei dem Fahrdynamik-/Radschlupfregelsystem z.B. um ein Antiblockiersystem (ABS) oder ein von der Anmelderin unter der Abkürzung ESP (elektronisches Stabilitätsprogramm) verwendetes Fahrdynamikregelsystem handeln. Die Vorwärts/Rückwärts-Fahrtrichtungsdaten geben an, ob das Fahrzeug momentan vorwärts oder rückwärts fährt, und können z.B. aus Rückwärtsgang-Erkennungsmitteln stammen, die feststellen, ob der Rückwärtsgang eingelegt ist oder nicht.

Soweit das Ortungsmodul 2 die zur Ortung benötigten Daten nicht dem Datenbus 1 entnimmt, werden sie durch die integrierten Ortungssensoreinheiten geliefert, speziell GPS-Daten des GPS-Empfängers 2b und Gyrodaten des Gyroskops 2c. Die Ortungsrecheneinheit 2a führt dann den eigentlichen rechnerischen Ortungsprozeß durch, wobei der Begriff "Ortung" vorliegend in einem weiten Sinn dahingehend zu verstehen ist, daß davon sowohl die Bestimmung der Fahrzeugposition als auch von dessen Höhenlage und Orientierung im Raum umfaßt sind. Dementsprechend ermittelt die Ortungsrecheneinheit 2a Fahrzeugpositionsdaten mit deren Ortungsgenauigkeitsklassifikation (Ortungsgüte), Fahrtrichtungswinkeldaten, Fahrgeschwindigkeitsdaten und Höhenlagedaten, welche die momentane Höhe des Fahrzeugs über Meeresspiegel (NN) angeben. Des weiteren sind Zeitbestimmungsmittel in der Ortungsrecheneinheit 2a enthalten, die eine hochgenaue Zeitangabe entspechend einer Funkuhr realisieren, wobei weltweit die im jeweiligen Land gültige Uhrzeit angegeben wird, z.B. gemäß GMT- oder UTC-Standard, ohne daß hierfür vom Benutzer komplizierte Menüeinstellungen vorgenommen werden müssen. Die Fahrtrichtungswinkeldaten enthalten neben eigentlichen Winkelinformationen auch Offset-, Driftund Skalierungsfaktor-Informationen.

Die Ortungsrecheneinheit 2a gibt diese ermittelten, aufbereiteten Ortungsdaten auf den Datenbus 1, wo sie den übrigen Busteilnehmern zur Verfügung stehen, z.B. den Telematikdiensteinheiten 3 und/oder nicht explizit gezeigten, an den Datenbus 1 angeschlossenen Fahrzeugsteuergeräten, wie Motor- und/oder Getriebesteuereinheit. Eine angeschlossene Motor- bzw. Getriebesteuereinheit kann insbesondere die vom Ortungsmodul 2 auf dem Datenbus 1 bereitgestellten Höhenlageinformationen übernehmen und benötigt auf diese Weise keinen eigenen Höhensensor. Beim Neustart wird zweckmäßigerweise der jeweils zuletzt beim Abstellen des Fahrzeugs vorliegende Höhenwert verwendet, bis wieder aktuelle Höhenlagedaten vorliegen.

Wie aus den obigen Erläuterungen erkennbar, leistet das Ortungsmodul 2 einen Ortungsprozeß unter Verwendung mehrerer paralleler Eingangsinformationen, und zwar den intern gewonnenen GPS-Daten, den intern gewonnenen Gyrodaten und den über den Datenbus 1 empfangenen Raddrehzahldaten, mit deren Hilfe das Ortungsmodul 2 auch eine Odometerfunktion erfüllt.

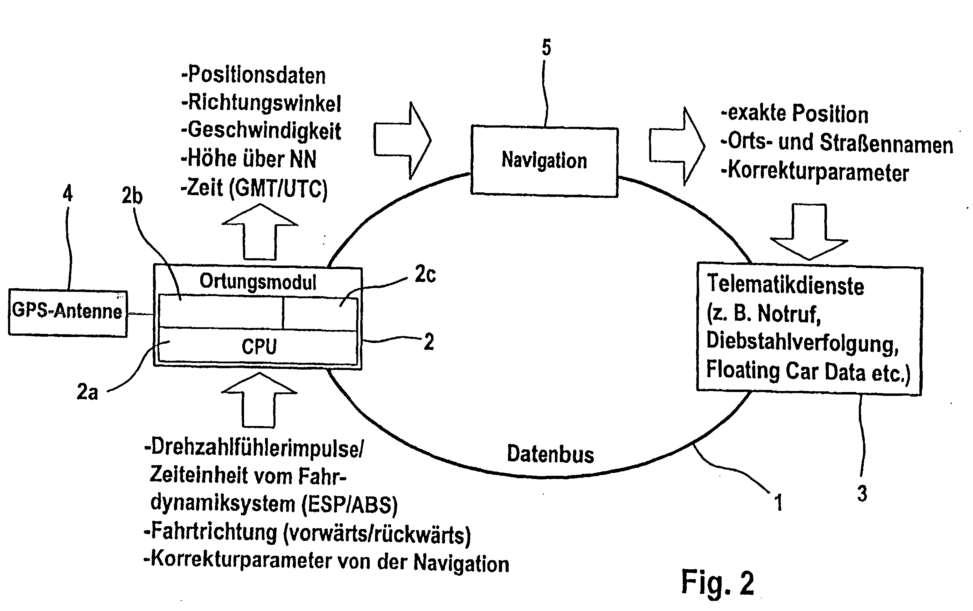

Das in Fig. 2 wiederum lediglich mit seinen hier speziell interessierenden Komponenten dargestellte Fahrzeugdatenbussystem entspricht im wesentlichen demjenigen von Fig. 1, wobei insoweit übereinstimmende Bezugszeichen für funktionell gleiche Elemente verwendet sind, mit der Ausnahme, daß das System von Fig. 2 eine Navigationseinheit 5 als einen weiteren Busteilnehmer enthält. Die Navigationseinheit 5 empfängt über den Datenbus 1 die vom Ortungsmodul 2 gelieferten, diversen Ortungsdaten und unterzieht speziell die empfangenen Positionsdaten einem herkömmlichen Map-Matching-Prozeß, in welchem die vom Ortungsmodul 2 ermittelte Fahrzeugposition mit Daten einer digital abgespeicherten Wegenetzkarte abgeglichen wird. Durch diesen Prozeß ermittelt die Navigationseinheit 5 eine gegebenenfalls korrigierte, exakte Fahrzeugposition mit einer neuen Ortungsgenauikeitsklassifikaition (Ortungsgüte) und gibt diese sowie begleitende Wegenetzinformationen, wie Orts- und Straβennamen, auf den Datenbus 1 aus. Die an den Datenbus 1 angeschlossenen Busteilnehmer können dann, soweit sie Fahrzeugpositionsdaten benötigen, hierfür die von der Navigationseinheit 5 bereitgestellten exakten Fahrzeugpositionsdaten verwenden. Dies gilt insbesondere auch für die Telematikdiensteinheiten 3.

Des weiteren gibt die Navigationseinheit 5 auf den Datenbus 1 Positionskorrekturdaten aus, welche die eventuelle Abweichung der von ihr ermittelten exakten Fahrzeugposition von der vom Ortungsmodul 2 ermittelten Fahrzeugposition repräsentieren. Das Ortungsmodul 2 kann diese rückgekoppelten Positionskorrekturdaten bzw. Korrekturparameter vom Datenbus 1 entnehmen und zur entsprechenden Korrektur seiner Ortungsbestimmung heranziehen, um die Positionsbestimmungsgenauigkeit zu verbessern.

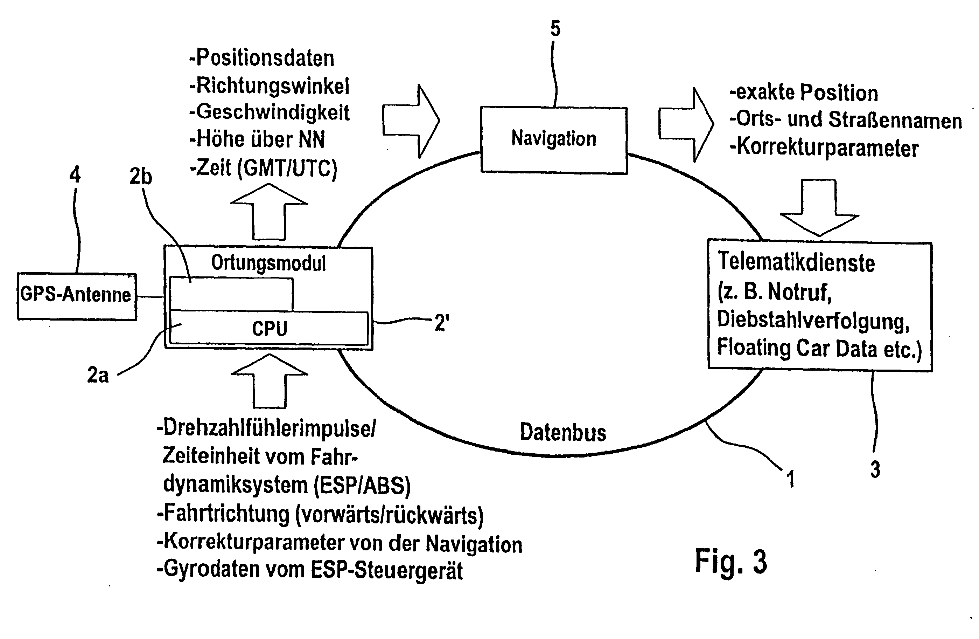

Das in Fig. 3 wiederum schematisch und teilweise dargestellte Fahrzeugdatenbussystem entspricht demjenigen von Fig. 2, wobei wiederum für funktionell gleiche Elemente übereinstimmende Bezugszeichen verwendet sind, mit der Ausnahme, daß ein modifiziertes Ortungsmodul 2' verwendet ist, das nur die Ortungsrecheneinheit 2a und den GPS-Empfänger 2b, jedoch kein Gyroskop enthält. In diesem Fall enthält das Ortungsmodul 2' Mittel zum busseitigen Empfangen und Auswerten von Gyrodaten eines Fahrdynamik-/Radschlupfregelsystems, z.B. von einem ESP-Steuergerät. Dies führt zu zufriedenstellenden Ergebnissen, wenn die Gyrosensormittel des Fahrdynamik-/Radschlupfregelsystems eine ausreichende Genauigkeit bzw. Leistungsfähigkeit und Zuverlässigkeit besitzen. Das Fahrdynamik-/Radschlupfregelsystem stellt die ermittelten Gyrodaten auf dem Datenbus 1 zur Verfügung, von wo sie vom Ortungsmodul 2' abgerufen werden können.

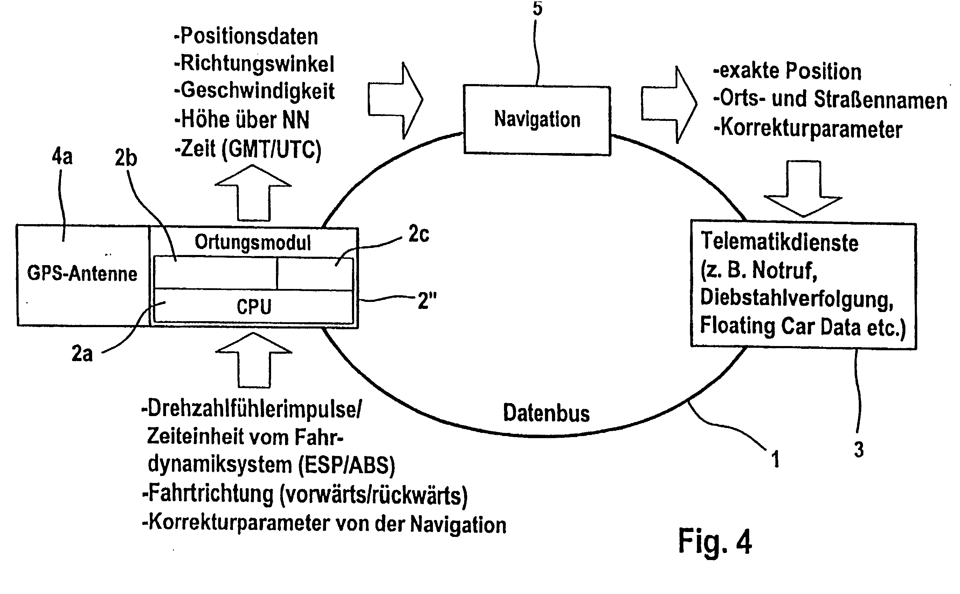

Das in Fig. 4 schematisch und teilweise dargestellte Fahrzeugdatenbussystem entspricht demjenigen von Fig. 2, wobei insoweit wiederum gleiche Bezugszeichen für funktionell gleiche Elemente verwendet sind, mit der Ausnahme, daß ein modifiziertes Ortungsmodul 2" verwendet ist, das zusätzlich eine integrierte GPS-Antenne 4a enthält. Dadurch entfällt die Notwendigkeit einer separat am Fahrzeug zu montierenden und an das Ortungsmodul anzuschließenden GPS-Antenne.

Wie die obigen Ausführungsbeispiele deutlich machen, wird durch die vorliegende Erfindung ein Fahrzeugdatenbussystem verwirklicht, bei dem ein als eigenständige Baueinheit realisiertes Ortungsmodul, z.B. in Form einer separaten Box oder eines Steckmoduls, als Busteilnehmer in das Bussystem eingebunden ist und alle zur Ortungsbestimmung verwendeten Komponenten enthält bzw. hierfür erforderliche Eingangsinformationen über den Datenbus empfängt. Das Ortungsmodul kann als kleinbauende Standardbox weltweit in den verschiedensten Fahrzeugen ohne größere Anpassungsmaßnahmen eingesetzt werden. Schon ohne implementierte Navigations- oder Notruffunktionalität lassen sich mit den vom Ortungsmodul gelieferten Ortungsdaten ortsbezogene Dienste nutzen, wie Diebstahlverfolgung, Stichprobenfahrzeug-Verkehrslagebestimmung etc. Die Nutzung der vom Ortungsmodul bereitgestellten Ortungsdaten macht das System unabhängig von den Herstellern verwendeter Kommunikationsgeräte, wie Telefonapparate. Mit Hilfe der Ortungsdaten des Ortungsmoduls kann eine Anzeige der Himmelsrichtung und/oder von Längen- und Breitengrad der aktuellen Fahrzeugposition erfolgen, was beispielsweise für eine Panneninformation hilfreich sein kann. Weiter ist eine hochgenaue Uhr mit Anzeige der weltweit im jeweiligen Land gerade gültigen Uhrzeit ohne komplizierte Menüeinstellungen durch den Benutzer realisierbar. Die Uhrzeit kann z.B. in einem Kombiinstrument oder in einem Standheizungsmodul angezeigt werden, wodurch sich ein separater Uhr-Chip einsparen läßt. Die Nutzung der Höhenlageinformationen des Ortungsmoduls durch eine Motor- und/oder Getriebeelektronik spart einen eigenständigen Höhensensor ein. Die durch das Ortungsmodul in standardisierter Form bereitgestellten Ortungsinformationen hinsichtlich Position, Ortungsgenauigkeitsklassifikation (Ortungsgüte), Fahrtrichtungswinkel, Drehrichtung, Höhenlage, Fahrzeugneigung etc. lassen sich über den Datenbus flexibel von den verschiedenen, auf Ortungsinformationen basierenden Systemen verwenden, z.B. für Notruf, Taxiruf, Navigation, Kurvenwarner, Stichprobenfahrzeug-Verkehrslagebestimmung, Fahrdynamikregelung, Antiblockiersystem, Antriebsschlupfregelung, Getriebe, Motorelektronik, Kombiinstrument und Komfort-Informationen.

## Patentansprüche

1. Fahrzeugdatenbussystem mit folgenden Merkmalen:
- einem Datenbus (1), über den mehrere angeschlossene Busteilnehmer miteinander in Datenübertragungsverbindung stehen, und
- Ortungsmitteln mit einem als einer der Busteilnehmer ausgebildeten Ortungsmodul (2), das zum Empfangen von Raddrehzahldaten, zur Gewinnung von Fahrzeugpositionsdaten, Fahrtrichtungswinkeldaten und Fahrgeschwindigkeitsdaten und zum Ausgeben dieser gewonnenen Daten auf den Datenbus eingerichtet ist und hierzu eine Ortungsrecheneinheit (2a) und eine Ortungssensorik aufweist, die wenigstens einen GPS-Empfänger (2b) mit zugehöriger GPS-Antenne (4) und Gyrodatenbestimmungsmittel umfasst,
**dadurch gekennzeichnet, daß**
das Ortungsmodul (2) zum Empfangen der Raddrehzahldaten über den Datenbus (1) eingerichtet ist,
wobei das Ortungsmodul (2) zusätzlich zum Empfangen von Vorwärts/Rückwärts-Fahrtrichtungsdaten über den Datenbus (1) und
zum Gewinnen von Höhenlagedaten und zum Ausgeben dieser gewonnenen Höhenlagedaten auf den Datenbus (1) eingerichtet ist und
wobei die Gyrodatenbestimmungsmittel Gyrodatenerfassungsmittel (2c) in Form eines Gyroskops (2c) oder Mittel zum busseitigen Empfangen und Auswerten von Gyrodaten eines Fahrdynamik-/Radschlupfsystems sein können.

2. Fahrzeugdatenbussystem nach Anspruch 1, weiter
**dadurch gekennzeichnet, daß**
zu den Positionsdaten eine Ortungsgenauigkeitsklassifikation angegeben wird, die die Unsicherheit der berechneten Positionsdaten angibt.

3. Fahrzeugdatenbussystem nach Anspruch 2, weiter
**dadurch gekennzeichnet, daß**
die Ortungsgenauigkeitsklassifikation auf den Datenbus (1) ausgegeben wird.

4. Fahrzeugdatenbussystem nach Anspruch 1, 2 oder 3, weiter
**dadurch gekennzeichnet, daß**
das Ortungsmodul (2") eine integrierte GPS-Antenne (4a) enthält.

5. Fahrzeugdatenbussystem nach einem der Ansprüche 1 bis 4, weiter
**dadurch gekennzeichnet, daß**
ein weiterer Busteilnehmer von einer Navigationseinheit (5) gebildet ist, welche die Fahrzeugpositionsdaten vom Ortungsmodul (2) über den Datenbus (1) empfängt und durch einen Map-Matching-Prozeß Positionskorrekturdaten gewinnt, die sie zur Rückkopplung an das Ortungsmodul auf den Datenbus gibt.

6. Fahrzeugdatenbussystem nach Anspruch 5, weiter
**dadurch gekennzeichnet, daß**
die Navigationseinheit (5) eine korrigierte, exakte Fahrzeugposition mit einer neuen Ortungsgenauigkeitsklassifikation ermittelt und auf den Datenbus (1) ausgibt.

7. Fahrzeugdatenbussystem nach Anspruch 5 oder 6, weiter
**dadurch gekennzeichnet, daß**
die Navigationseinheit (5) begleitende Wegenetzinformationen ermittelt und auf den Datenbus (1) ausgibt.

8. Fahrzeugdatenbussystem nach einem der Ansprüche 1 bis 7, weiter
**dadurch gekennzeichnet, daß**
eine oder mehrere Telematikdiensteinheiten (3) als weitere Busteilnehmer vorgesehen sind, welche vom Ortungsmodul (2) oder der Navigationseinheit (5) gewonnene Daten nutzen.

9. Fahrzeugdatenbussystem nach einem der Ansprüche 1 bis 8, weiter
**dadurch ,gekennzeichnet, daß**
als ein jeweiliger weiterer Busteilnehmer eine Motorund/oder eine Getriebesteuerungseinheit vorgesehen ist, welche die vom Ortungsmodul (2) gewonnenen Höhenlagedaten nutzt.

10. Fahrzeugdatenbussystem nach einem der Ansprüche 1 bis 9, weiter
**dadurch gekennzeichnet, daß**
das Ortungsmodul (2) Teil eines weiteren Busteilnehmers ist, wobei die Ortungsrecheneinheit (2a) von diesem Busteilnehmer für zusätzliche Aufgaben verwendet wird.

## Claims

1. Vehicle data bus system having the following features:
- a data bus (1), by means of which several bus subscribers are interconnected in a data transmission connection,
- positioning means with a positioning module (2) configured as a bus subscriber, which is programmed to receive wheel speed data, acquire vehicle position data, angle data relating to direction of travel and vehicle speed data, and to output this acquired data on the data bus, and for this purpose having a position calculating unit (2a) and positioning sensors, which include at least a GPS receiver (2b) with associated GPS antenna (4) and gyro data detection means,
**characterised in that**
the positioning module (2) is programmed to receive the wheel speed data via the data bus (1),
the positioning module (2) is additionally programmed to receive forward/reverse motion data via the data bus (1) and
is programmed to acquire height data and output this acquired height data on the data bus (1), and
wherein the gyro data detection means may be provided in the form of gyro data sensing means (2c) in the form of a gyroscope (2c) or means for receiving and evaluating gyro data of a driving dynamics/wheel slip system at the bus end.

2. Vehicle data bus system as claimed in claim 1, further
**characterised in that**
a positioning accuracy classification is specified for the position data, which specifies the uncertainty of the calculated position data.

3. Vehicle data bus system as claimed in claim 2, further
**characterised in that**
the positioning accuracy classification is output on the data bus (1).

4. Vehicle data bus system as claimed in claim 1, 2 or 3, further
**characterised in that**
the positioning module (2") contains an integrated GPS antenna (4a).

5. Vehicle data bus system as claimed in one of claims 1 to 4, further
**characterised in that**
another bus subscriber is provided in the form of a navigation unit (5), which receives the vehicle position data from the positioning module (2) via the data bus (1) and acquires position correction data from a map-matching process, which it feeds back to the positioning module on the data bus.

6. Vehicle data bus system as claimed in claim 5, further
**characterised in that**
the navigation unit (5) determines a corrected, exact vehicle position with a new positioning accuracy classification and outputs it to the data bus (1).

7. Vehicle data bus system as claimed in claim 5 or 6, further
**characterised in that**
the navigation unit (5) acquires accompanying road network information and outputs it on the data bus (1).

8. Vehicle data bus system as claimed in one of claims 1 to 7, further
**characterised in that**
one or more telematic service units (3) are provided as other bus subscribers, which use data acquired from the positioning module (2) or the navigation unit (5).

9. Vehicle data bus system as claimed in one of claims 1 to 8, further
**characterised in that**
an engine and/or a transmission control unit is provided as another respective bus subscriber, which uses the height data acquired from the positioning module (2).

10. Vehicle data bus system as claimed in one of claims 1 to 9, further
**characterised in that**
the positioning module (2) is part of another bus subscriber, and the position calculating unit (2a) is used by this bus subscriber for additional tasks.

## Revendications

1. Système bus de données pour véhicule comportant les caractères suivants :
Un bus données (1) par l'intermédiaire duquel plusieurs participants bus raccordés se trouvent en relation avec une liaison de transfert de données, et
Des moyens de localisation avec un module de localisation (2) configuré comme l'un des participants de bus, organisé pour la réception de données de vitesses de roue, la récupération de données de position de véhicule, données d'angle de sens de marche et de données de vitesse de marche, et pour la sortie de ces données sur le bus de données, et comportant à cet effet une unité de calcul de localisation (2a) et des éléments sensoriels qui se composent au moins d'un récepteur GPS (2b) avec antenne GPS associée (4) et de moyens de détermination de données gyro, **caractérisé en ce que** le module de localisation (2) est configuré pour la réception de données de vitesse de roue par l'intermédiaire du bus de données (1),
le module de localisation (2) étant par ailleurs configuré pour la réception de données de sens de marche avant / arrière via le bus de données (1)
et pour la récupération de données d'altitude et pour la sortie de ces données d'altitude sur le bus de données (1),
les moyens de détermination de données gyro pouvant être des moyens de saisie de données gyro (2c) sous forme d'un gyroscope (2c) ou des moyens de réception et évaluation côté bus de données gyro d'un système dynamique de conduite et antipatinage.

2. Système bus de données pour véhicule selon la revendication 1, **caractérisé par ailleurs en ce qu**'une classification de la précision de localisation est fournie en plus des données de position, classification indiquant l'incertitude des données de position calculées.

3. Système bus de données pour véhicule selon la revendication 2, **caractérisé par ailleurs en ce que** la classification de la précision de localisation est fournie au bus de données (1).

4. Système bus de données pour véhicule selon la revendication 1, 2 ou 3, **caractérisé par ailleurs en ce que** le module de localisation (2") contient une antenne GPS (4a) intégrée.

5. Système bus de données pour véhicule selon l'une quelconque des revendications 1 à 4, **caractérisé par** ailleurs en ce qu'un autre participant bus est configuré par une unité de navigation (5) recevant les données de la position du véhicule depuis le module de localisation (2) par l'intermédiaire du bus de données (I), obtenant des données de correction de position par l'intermédiaire d'un processus map-matching, et envoyant celles-ci au module de localisation sur le bus de données, en vue de l'action par retour.

6. Système bus de données pour véhicule se!on la revendication 5, **caractérisé par ailleurs en ce que** l'unité de navigation (5) détermine une position exacte et corrigée de la position au moyen d'une nouvelle classification de précision de localisation et la transmet au bus de données.

7. Système bus de données pour véhicule selon la revendication 5 ou 6, **caractérisé par ailleurs en ce que** l'unité de navigation (5) détermine des informations concomitantes à partir du réseau de routes et les transmet au bus de données.

8. Système bus de données pour véhicule selon l'une quelconque des revendications 1 à 7, **caractérisé par ailleurs en ce qu**'une une ou plusieurs unité(s) de service télématique (3) est (sont) prévue(s) comme participants supplémentaires au bus, utilisant des données provenant du module de localisation (2) ou de l'unité de navigation (5).

9. Système bus de données pour véhicule selon l'une quelconque des revendications 1 à 8, **caractérisé par ailleurs en ce qu**'une unité de régulation de moteur et/ou de transmission est prévue comme autre participant respectif de bus, exploitant les données d'altitude récupérées du module de localisation (2).

10. Système bus de données pour véhicule selon l'une quelconque des revendications 1 à 9, **caractérisé par ailleurs en ce que** le module de localisation (2) est un constituant d'une autre partenaire de bus, l'unité de calcul de la localisation (2a) étant exploitée par ce participant de bus pour des missions complémentaires.
